# EUROPÄISCHE PATENTSCHRIFT

(11) **EP 4 285 042 B1**
(45) Veröffentlichungstag und Bekanntmachung des Hinweises auf die Patenterteilung: **01.05.2024**
(21) Anmeldenummer: 22736269.6
(22) Anmeldetag: 29.06.2022
(51) Int. Cl.: F16J 15/3208, F16J 15/3252, F16J 15/3284, F16J 15/3216, F16J 15/324

(54) **ROTATIONSDICHTUNGSANORDNUNG MIT ROTATIONSDICHTUNG UND MIT ÖLSEITIG ANGEORDNETEM SCHAUMRING**
ROTARY SEAL ASSEMBLY WITH ROTARY SEAL AND FOAM RING ARRANGED ON THE OIL SIDE
ENSEMBLE JOINT D'ÉTANCHÉITÉ ROTATIF AYANT UN JOINT D'ÉTANCHÉITÉ ROTATIF ET UN ANNEAU EN MOUSSE AGENCÉ DU CÔTÉ HUILE

(30) Priorität: 29.06.2021 DE 102021206769
(43) Veröffentlichungstag der Anmeldung: 06.12.2023
(73) Patentinhaber: Trelleborg Sealing Solutions Germany GmbH, 70565 Stuttgart (DE)
(72) Erfinder: WILKE, Mandy, 71034 Böblingen (DE); JORDAN, Holger, 73765 Neuhausen (DE); CORNELI, Tobias, 56288 Kastellaun (DE)
(74) Vertreter: Kohler Schmid Möbus Patentanwälte
(86) Internationale Anmeldenummer: PCT/EP2022/067895
(87) Internationale Veröffentlichungsnummer: WO 2023/275141

(56) Entgegenhaltungen:
- DE-A1-102008 035 315
- JP-A- 2017 026 072
- JP-B2- 6 460 751

## Beschreibung

Die Erfindung betrifft eine Rotationsdichtungsanordnung mit einer Rotationsdichtung. Die Rotationsdichtungsanordnung umfasst ein erstes Maschinenteil in Form einer Welle und ein die Welle umgreifendes zweites Maschinenteil, wobei die Welle und das zweite Maschinenteil unter Ausbildung eines Dichtspalts voneinander beabstandet und um eine Rotationsachse relativ zueinander verstellbar bzw. bewegbar angeordnet sind. An einem der beiden Maschinenteile ist eine Dichtungshaltestruktur ausgebildet. Die Rotationsdichtung weist einen Fußabschnitt und eine Dichtlippe auf, die über einen Verbindungsabschnitt miteinander verbunden sind. Der Fußabschnitt ist an oder in der Dichtungshaltestruktur des einen Maschinenteils gehalten angeordnet. Die Dichtlippe liegt an einer Dichtfläche des jeweilig anderen Maschinenteils dynamisch dichtend an, um eine Öl- oder Hochdruckseite H gegenüber einer Außen- oder Niederdruckseite N der Rotationsdichtungsanordnung abzudichten. Auf der Ölseite ist ein Schaumring mit einem Grundkörper und mit einem Halteabschnitt angeordnet, wobei der Schaumring das erste Maschinenteil umgreift und über den Halteabschnitt am Fußabschnitt der Rotationsdichtung gehalten angeordnet ist.

Ein solche Rotationsdichtungsanordnung ist beispielsweise durch die JP 2017 026072 A bekannt geworden. Bei dieser bekannten Rotationsdichtungsanordnung dient ein Dichtring mit einer Dichtlippe zum Abdichten einer rotierenden Welle. Auf einer Seite der Dichtlippe ist ein ringförmiges, schaumelastisches Fettinfiltrationselement angeordnet, das in Kontakt mit der Welle steht. In dem Fettinfiltrationselement wird Fett in einem Infiltrationszustand zurückgehalten.

Aus JP 6 460751 B2 ist eine Rotationsdichtungsanordnung bekannt, die einen Dichtring mit einer Dichtlippe und ein auf einer Seite der Dictlippe angeordnetes, ringförmiges Filterelement aus einem Schaummaterial aufweist.

Schließlich offenbart DE 10 2008 035315 A1 noch eine Dichteinrichtung mit einem ringförmigen Abschirmelement aus Schaumstoff.

Im Betriebseinsatz der bekannten Rotationsdichtungsanordnungen kann es durch Abrieb und andere Verunreinigungen zu einer Beschädigung und damit einhergehend zu einer Funktionsstörung bis hin zu einem Funktionsausfall der Rotationsdichtung kommen. Dies ist insbesondere bei kritischen Anwendungen mit Gefahren verbunden. Im Betriebseinsatz der Rotationsdichtungsanordnung ist zudem die gesicherte Schmierung des dynamischen Dichtbereichs der Rotationsdichtung wesentlich. Diesbezüglich haben sich insbesondere spezielle Oberflächenstrukturen der Rotationsdichtung, die auch als Tribostrukturen bezeichnet werden, als vorteilhaft erwiesen.

DE 10 2013 212 960 A1 offenbart für einen nochmals weitergehenden Schutz der dynamischen Dichtlippe einer Rotationsdichtung einen Schaumkörper, der an der Dichtlippe befestigt ist. Der Schaumkörper liegt im Betriebseinsatz gemeinsam mit der Dichtkante an der dynamisch abzudichtenden Berührfläche eines Maschinenteils an und kann auf der Außenseite oder auch auf der Ölseite der Dichtlippe angeordnet sein. Durch den Schaumring kann es im Betriebseinsatz jedoch zu Funktionsstörungen, insbesondere einem verschlechterten Ansprechverhalten der Dichtlippe auf Änderungen des ölseitigen Betriebsdrucks bzw. auf eine Exzentrizität der abzudichtenden Welle, kommen.

Vor diesem Hintergrund ist es die Aufgabe der Erfindung, eine Rotationsdichtungsanordnung anzugeben, die einerseits einen verbesserten Schutz des Dichtbereichs der Rotationsdichtung gegenüber partikulären Verunreinigungen sowie eine verbesserte Schmierung des Dichtbereichs ermöglicht, ohne dass hierdurch das Dichtvermögen oder Ansprechverhalten der Rotationsdichtung beeinflusst wird.

Diese Aufgabe wird durch eine Rotationsdichtungsanordnung mit den in Anspruch 1 angegebenen Merkmalen gelöst.

Die erfindungsgemäße Rotationsdichtungsanordnung zeichnet sich durch einen auf der Ölseite angeordneten Schaumring mit einem Grundkörper und mit einem Halteabschnitt aus, der das erste Maschinenteil umgreift und der über den Halteabschnitt am Fußabschnitt der Rotationsdichtung gehalten angeordnet ist. Der Schaumring kann zumindest teilweise, vorzugsweise im Wesentlichen vollständig, aus einem geschlossenzelligen, einem offenzelligen oder einem gemischt geschlossenzelligen/offenzelligen Schaumstoff ausgebildet sein. Durch den Schaumring können einerseits auf der Ölseite des Dichtspalts, d. h. ölseitig, anfallende Partikel bzw. partikuläre Verunreinigungen wie beispielsweise abrasiv wirkender Materialabrieb oder Oxidationsprodukte von Schmieröl, zurückgehalten (gefiltert), absorbiert oder an das Material des Schaumstoffes adsorbiert werden. Darüber hinaus kann sich der Schaumring mit auf der Ölseite angeordnetem Schmiermittel, beispielsweise im Wege von Kapillarkräften, vollsaugen und so im Dichtspalt als ein Schmiermittelspeicher dienen. Hierdurch kann einem unerwünschten Trockenlaufen der Rotationsdichtung im Dichtbereich, d. h. im Bereich der an der Dichtfläche dynamisch dichtend anliegenden Dichtkante der Dichtlippe, entgegengewirkt werden. Insgesamt kann so durch den Schaumring eine protektive Wirkung für die Rotationsdichtung erreicht werden. Dies ist für die Standzeit der Rotationsdichtung von Vorteil.

Nach der Erfindung kann der Grundkörper an seiner der Dichtfläche zuweisenden Umfangsseite im unbelasteten nicht-montierten Zustand des Schaumrings oder im montierten Zustand des Schaumrings in einer zur Dichtfläche orthogonalen Richtung gewellt ausgeführt sein. Bei der erstgenannten Ausführungsvariante ist die Welligkeit der der Dichtfläche zuweisenden Umfangsseite im Einbauzustand des Schaumrings mithin verstrichen bzw. aufgehoben. Bei der letztgenannten Ausführungsvariante liegt der Schaumring in seiner Umfangsrichtung nur abschnittsweise an der Dichtfläche des jeweilig anderen Maschinenteils (Welle) an.

Alternativ oder zusätzlich kann der Schaumring eine dem die Dichtungshaltestruktur aufweisenden Maschinenteil zuweisende zweite Umfangsseite aufweisen, die im unbelasteten nicht-eingebauten Zustand des Schaumrings oder im eingebauten Zustand des Schaumrings gewellt ausgeführt ist.

Die Umfangsseite des Schaumrings, die der Dichtfläche zugewandt ist, und/oder die Umfangsseite des Schaumrings, die von der Dichtfläche weg weist, kann/können also jeweils Ausbuchtungen und/oder Aussparungen aufweisen, die, insbesondere in regelmäßigen, Abständen, umfangsseitig angeordnet sind. Die Aussparungen und/oder die Ausbuchtungen können beispielswiese hügelförmig, halbkugelförmig, halbkreisförmig, ballig, kugelsegmentförmig, trapezförmig oder vieleckig ausgebildet sein, auch eine Kombination dieser Formgebungen ist möglich.

Weist der Schaumring auf beiden Umfangsseiten die Aussparungen und/oder die Ausbuchtungen auf, das heißt, wenn der Schaumring auf beiden Umfangsseiten wellig ausgebildet ist, so können die Ausbuchtungen und/oder die Aussparungen zueinander jeweils in radialer Richtung paarweise fluchtend angeordnet sein. Auch eine zueinander versetzte Anordnung der Aussparungen und/oder Ausbuchtungen ist möglich. Beispielsweise können die Ausbuchtungen und/oder Aussparungen paarweise zueinander 90° um den Umfang versetzt ausgebildet sein. Bei den vorgenannten gewellten Ausführungsvarianten zeigt sich mithin im Betriebseinsatz der Rotationsdichtungsanordnung in Umfangrichtung eine variable Kontaktpressung des Dichtrings und der Dichtfläche. Dadurch kann im Betriebseinsatz eine besonders effiziente Aufnahme/Abgabe von Schmiermittel in/am Schaumring erreicht werden. Darüber hinaus ergeben sich dadurch tribiologische Vorteile.

Nach der Erfindung sind vorzugsweise sowohl der Halteabschnitt als auch der Grundkörper aus dem geschlossenzelligen, offenzelligen oder gemischt geschlossenzelligen/ offenzelligen Schaumstoff ausgebildet. Dadurch kann der Schaumring einstückig, beispielsweise durch Schaumgießen oder durch Extrusion, auf technisch einfache und kostengünstige Weise hergestellt werden.

Gemäß einer alternativen Ausführungsform der Erfindung ist der Grundkörper aus dem geschlossenzelligen, offenzelligen oder gemischt geschlossenzelligen/offenzelligen Schaumstoff ausgebildet.

Der Grundkörper ragt nach der Erfindung vorzugsweise von dem Halteabschnitt in Richtung der Dichtfläche aus, sodass im Wesentlichen eine Aussparung in dem zweiten Maschinenteil, in dem die Rotationsdichtungsanordnung angeordnet ist, in radialer Richtung von dem Grundkörper vollständig abgedeckt ist. Mit anderen Worten ist die Rotationsdichtungsanordnung senkrecht zur Rotationsachse oder in einer radialen Richtung vorzugsweise vollständig von dem Grundkörper abgeschirmt. Im Betriebseinsatz der Rotationsdichtungsanordnung strömt das gesamte Schmiermittel, dass zu der Dichtkante gelangt, zunächst durch den Schaumstoff. Dies ist vorteilhaft, weil dadurch eine besonders große Menge an Partikeln oder sonstigen Störstoffen im Dichtspalt bzw. im Schmiermittel gefiltert werden kann.

Dadurch, dass der Schaumring am Fußabschnitt der Rotationsdichtung gehalten angeordnet ist, kann darüber hinaus eine mechanische bzw. funktionelle Entkopplung des Schaumrings und der Dichtlippe erreicht werden. Der Schaumring ist dazu von der Dichtlippe sowie einer ggf. vorhandenen Dichtkante der Dichtlippe vorzugsweise beabstandet angeordnet. So wird das Dichtvermögen sowie das Ansprechverhalten der Dichtlippe auf eine Exzentrizität der Welle oder eine Veränderung eines an der Dichtlippe ölseitig angreifenden Betriebsdrucks, vom Schaumring nicht nachteilig beeinflusst. Zugleich bleibt auch die Dichtlippe bzw. deren mögliche Auslenkbewegungen ohne funktionellen Einfluss oder im Wesentlichen ohne funktionellen Einfluss auf den Schaumring. Zu beachten ist, dass der Schaumring auch bei existierenden Rotationsdichtungen nachrüstbar ist, sodass die jeweiligen Rotationsdichtungsanordnungen die Funktionalität der vorliegenden Erfindung aufweisen.

Nach der Erfindung erstreckt sich der Schaumring unmittelbar vom Fußabschnitt der Rotationsdichtung in Richtung der Längserstreckung des Verbindungsabschnitts, d. h. bei einer als Radialwellendichtring ausgebildeten Rotationsdichtung in einer zur Rotationsachse radialen Richtung, bis auf Höhe der Dichtkante oder nahezu bis auf Höhe der Dichtkante der Rotationsdichtung.

Gemäß einer besonders bevorzugten Weiterbildung der Erfindung erstreckt sich der Schaumring unmittelbar vom Fußabschnitt der Rotationsdichtung in Richtung der Längserstreckung des Verbindungsabschnitts, d. h. bei einer als Radialwellendichtring ausgebildeten Rotationsdichtung in einer zur Rotationsachse radialen Richtung, bis auf Höhe der Dichtkante oder nahezu bis auf Höhe der Dichtkante der Rotationsdichtung. Der Schaumring kann sich gemäß einer weiteren Ausführungsform von dem die Dichtungshaltestruktur aufweisenden Maschinenteil bis zur Dichtfläche erstrecken. Der Schaumring liegt in diesem Fall an beiden Maschinenteilen unmittelbar an.

Nach Weiterbildung der Erfindung erstreckt sich der Halteabschnitt vom Grundkörper in einer seitlichen Richtung weg. Insbesondere erstreckt sich der Halteabschnitt vom Grundkörper im Wesentlichen in einer axialen Richtung von dem Grundkörper weg. Dadurch kann die Montage des Schaumrings an der Rotationsdichtung vereinfacht werden.

Der Halteabschnitt kann in Umfangsrichtung des Schaumrings voneinander beabstandet angeordnete Haltesegmente aufweisen oder aber ringförmig geschlossen ausgeführt sein.

Nach der Erfindung kann der Schaumring über den Halteabschnitt an der Rotationsdichtung, bevorzugt alleinig, geklemmt gehalten sein. Dadurch kann die Montage des Schaumrings auf besonders einfache Weise bewerkstelligt werden.

Zwecks einer besonders zuverlässigen Positions- und Lagesicherung des Schaumrings an der Rotationsdichtung erstreckt sich der Halteabschnitt des Schaumrings nach der Erfindung vorzugsweise bis zum Verbindungsabschnitt der Rotationsdichtung. Der Verbindungsabschnitt der Rotationsdichtung bildet in diesem Fall für den Schaumring mithin einen Montageanschlag, durch den die Montage des Schaumrings an der Rotationsdichtung weiter vereinfacht wird.

Nach der Erfindung können der Halteabschnitt und der Fußabschnitt der Rotationsdichtung jeweils geriffelt ausgeführt sein. Bevorzugt erstreckt sich dabei jeder Riffel des Halteabschnitts des Schaumrings bzw. des Fußabschnitts der Rotationsdichtung in Umfangsrichtung des betreffenden Bauteils. Im montierten Zustand kämmen die Riffel der beiden Bauteile, wodurch der Schaumring gegenüber einem unerwünschten Diskonnektieren von der Rotationsdichtung gesichert ist.

Gemäß einer bevorzugten Weiterbildung der Erfindung ist die Rotationsdichtung und/oder der Schaumring mit einer Armierungseinlage versehen.

Die jeweilige Armierungseinlage weist vorzugsweise eine L-förmige Querschnittsform auf. Im Falle der Rotationsdichtung ist dadurch einerseits eine sichere Verankerung der Rotationsdichtung in/an der Dichtungshaltestruktur ermöglicht. Im Falle des Schaumrings kann dieser besonders zuverlässig, insbesondere durch Klemmen, an der Rotationsichtung befestigt sein. Darüber hinaus kann so auch ein wenig formstabiles Schaumstoffmaterial für den Schaumring eingesetzt werden.

Für eine mechanisch nochmals zuverlässigere Befestigung des Schaumrings am Fußabschnitt der Rotationsdichtung kann der Schaumring über eine Rastverbindung oder eine Schraubverbindung, insbesondere eine Bajonettverbindung, am Fußabschnitt, insbesondere an einer Armierungseinlage der Rotationsdichtung gesichert sein.

Alternativ kann der Schaumring eine zusätzliche Vorrichtung aufweisen, mit der dieser an dem Fußabschnitt befestigbar ist. Die Vorrichtung kann beispielsweise ein Metall oder einen Kunststoff umfassen bzw. aus einem dieser Werkstoffe gebildet sein. Diese kann insbesondere eine Klipsverbindung an dem Fußabschnitt ermöglichen. Zusammengefasst kann der Schaumring kraft- und/oder form- und/oder stoffschlüssig mit dem Fußabschnitt verbunden sein. Dies ermöglicht den Einsatz der Rotationsdichtungsanordnung auch bei Hochgeschwindigkeitsanwendungen bzw. bei solchen Anwendungen, bei denen eine Exzentrizität der Welle und damit eine Drehmomentbeaufschlagung des Schaumrings im Betriebseinsatz nicht sicher unterbunden werden kann.

Für eine nochmals zuverlässigere Lagesicherung und auch präzisere Positionierung des Schaumrings an der Rotationsdichtung hat es sich in der Praxis als vorteilhaft gezeigt, wenn der Schaumring am freien Ende des Fußabschnitts zusätzlich in einer axialen Richtung abgestützt ist. Der Schaumring weist dazu vorzugsweise eine Anlageschulter für den Fußabschnitt der Rotationsdichtung auf.

Der Grundkörper des Schaumrings kann nach der Erfindung insbesondere eine rechteckige oder eine sich in Richtung der Dichtfläche verjüngende Querschnittsform aufweisen. Im erstgenannten Fall ergibt sich eine besonders einfache Fertigung des Schaumrings. In letztgenanntem Fall kann eine vorgegebene Mindest-Kontaktflächenpressung des Schaumrings und der Dichtfläche vereinfacht realisiert werden.

Der Schaumring liegt nach der Erfindung an der Dichtfläche des jeweilig anderen Maschinenteils vorzugsweise unmittelbar an. Dies kann umlaufend oder in Umfangsrichtung des Schaumrings mit Unterbrechungen der Fall sein. Bei der erstgenannten Ausführungsform können ggf. abrasiv wirkende partikuläre Verunreinigungen besonders effektiv von dem Dichtbereich der Dichtlippe der Rotationsdichtung ferngehalten werden.

Der Grundkörper des Schaumrings bzw. der gesamte Schaumring kann erfindungsgemäß zumindest teilweise, vorzugsweise im Wesentlichen vollständig, aus einem geschlossenzelligen, einem offenzelligen oder einem gemischt geschlossenzelligen/offenzelligen Schaumstoff ausgebildet sein. Ein offenporiger Schaumstoff erlaubt ein besonders großes Aufnahmevermögen des Schaumrings für Schmiermittel. Die geschlossenzellige Ausführungsform erlaubt demgegenüber besonders ausgeprägte Kapillareffekte sowie eine größere Formstabilität des Schaumrings.

Nach der Erfindung kann der Schaumring mehrere Radialkanäle aufweisen, die sich in einer radialen Richtung von der der Dichtfläche zuweisenden Umfangsseite des Schaumrings in den Schaumring hineinerstrecken. Diese Radialkanäle weisen vorzugsweise einen Querschnitt zwischen 0,5 und 2,0 Millimetern auf. Dadurch kann eine kapillarkraftbedingte Aufnahme von Schmiermittel nochmals weiter begünstigt werden.

Die Rotationsdichtung ist nach der Erfindung vorzugsweise druckaktivierbar. Der Schaumring kann in diesem Fall erfindungsgemäß mit einer axialen Durchgangsbohrung oder mit mehreren axialen Durchgangsbohrungen versehen sein.

Nach der Erfindung weist die Rotationsdichtung vorzugsweise eine zur Außenseite des Dichtspalts weisende Staublippe auf. Dadurch kann einem unerwünschten Eintritt von Verunreinigungen von außen in den Dichtspalt nochmals zuverlässiger entgegengewirkt werden.

Die Dichtlippe liegt an der Dichtfläche erfindungsgemäß vorzugsweise mittels eines Vorspannelements, insbesondere mittels einer Wurmfeder, an der Dichtfläche vorgespannt dichtend an.

Der Schaumring liegt an dem die Dichtungshaltestruktur aufweisenden Maschinenteil vorteilhaft unmittelbar an.

Die Rotationsdichtung und der Schaumring können erfindungsgemäß in einer hülsenförmigen Kartusche des einen der beiden Maschinenteile angeordnet sein. Dadurch kann die Montage der Rotationsdichtungsanordnung weiter vereinfacht werden.

Gemäß einer Weiterbildung der Erfindung ist der Schaumring zumindest teilweise beschichtet sein. Insbesondere weist der Schaumring zumindest auf seinem Innenumfang und/oder auf seinem Außenumfang, das heißt zumindest auf der Fläche, die der Dichtfläche zugewandt ist, und/oder auf der Fläche, die von der Dichtfläche weg weist, eine Beschichtung auf. Die Beschichtung kann beispielsweise eine statische Aufladung bezwecken, sodass Partikel und/oder Verunreinigungen an dem Schaumring haften und/oder in dem Schaumring aufgenommen werden. Die Beschichtung kann auch beispielsweise bewirken, dass der Schaumring eine höhere Steifigkeit aufweist. Die Beschichtung dient somit als eine Art Exoskelett für den Schaumring. Die Beschichtung ist dabei vorteilhaft zumindest im Anbindungsbereich des Halteabschnitts am Grundkörper angeordnet, um selbigen auszusteifen. Ein unerwünschtes Abknicken des Grundkörpers relativ zum Halteabschnitt kann dadurch vermieden werden. Mit anderen Worten kann dadurch eine definierte Position des Grundkörpers und des Halteabschnitts relativ zueinander gewährleistet werden.

Zusätzlich kann der Schaumring nach der Erfindung mit Additiven versehen sein, die bewirken, dass der Schaumring beispielsweise hydrophil, hydrophob, lipophil oder lipophob oder antistatisch ist oder eine höhere Temperaturbeständigkeit aufweist. Ist der Schaumring hydrophil ausgerüstet, kann dieser beispielsweise Wasser, das in dem Schmiermittel enthalten ist, aufnehmen. Somit ist die Dichtkante der Dichtung vor Wasser geschützt. Dadurch kann die Lebensdauer der Rotationsdichtungsanordnung weiter verbessert sein.

Ist der Schaumring beispielsweise mit lipophoben Additiven versehen, so wird dadurch im Betriebseinsatz weniger Schmiermittel im Schaumring aufgenommen, wodurch größere Mengen von Partikel und/oder Schmutz- und Schwebstoffe und/oder anderen Störstoffen von dem Schaumring aufgenommen werden können. Dadurch kann die Lebensdauer der Rotationsdichtungsanordnung weiter verbessert sein. Auch durch Additive, die die Temperaturbeständigkeit des Schaumrings erhöhen, kann die Lebensdauer der Rotationsdichtungsanordnung erhöht sein.

Nach der Erfindung kann ein zusätzlicher Schaumring auch auf der Niederdruckseite bzw. Außenseite der Rotationsdichtung angeordnet sein. Der zusätzliche Schaumring kann gemäß einem der oben beschriebenen Aspekte ausgebildet sein. Mit anderen Worten kann ein jeweiliger Schaumring sowohl auf der Hochdruckseite als auch auf der Niederdruckseite angeordnet sein. Dadurch kann gewährleistet sein, dass die Dichtkante beiderseitig vor Schmutz geschützt ist.

Weitere Vorteile der Erfindung ergeben sich aus der Beschreibung und der Zeichnung.

Nachfolgend ist die Erfindung anhand von in der Zeichnung wiedergegebenen Ausführungsbeispielen näher erläutert. Es versteht sich, dass die gezeigten und beschriebenen Ausführungsformen nicht als abschließende Aufzählung zu verstehen sind, sondern für die Schilderung der Erfindung vielmehr beispielhaften Charakter haben.

In der Zeichnung zeigen:
- Fig. 1:: eine Rotationsdichtungsanordnung mit einem ersten und mit einem zweiten Maschinenteil, die relativ zueinander um eine Rotationsachse rotierbar gelagert sind und mit einer Rotationsdichtung zum Abdichten einer Ölseite des zwischen den beiden Maschinenteilen ausgebildeten Dichtspalts, wobei auf der Ölseite ein Schaumring angeordnet ist, der am statisch dichtenden Fußabschnitt der Rotationsdichtung geklemmt gehalten angeordnet ist, in einer Schnittdarstellung;
- Fig. 2:: die Rotationsdichtungsanordnung gemäß Fig. 1 in einer weiteren Schnittdarstellung im Bereich des Kontakts des Schaumrings mit der Dichtfläche des ersten Maschinenteils;
- Fig. 3:: eine weitere Rotationsdichtungsanordnung, bei der der Schaumring eine im Vergleich zum Schaumring gemäß Fig. 2 größere axiale Länge aufweist;
- Fig. 4:: eine weitere Rotationsdichtungsanordnung mit einem auf der Ölseite des Dichtspalts angeordneten Schaumring, der eine sich in Richtung der Dichtfläche verjüngende Querschnittsform aufweist;
- Fig. 5:: eine weitere Rotationsdichtungsanordnung, bei der der Schaumring in radialer Richtung an beiden Maschinenteilen anliegt und der zusätzlich am Fußabschnitt in axialer Richtung abgestützt ist;
- Fig. 6:: eine weitere Rotationsdichtungsanordnung in einem Detailausschnitt, bei der der Schaumring im Gewindeeingriff mit dem Fußabschnitt der Rotationsdichtung steht;
- Fig. 7:: eine weitere Rotationsdichtungsanordnung in einem Detailausschnitt, bei der der Fußabschnitt der Rotationsdichtung ringförmig geschlossene Riffel aufweist; und
- Fig. 8:: einen Schaumring in einer perspektivischen Ansicht;

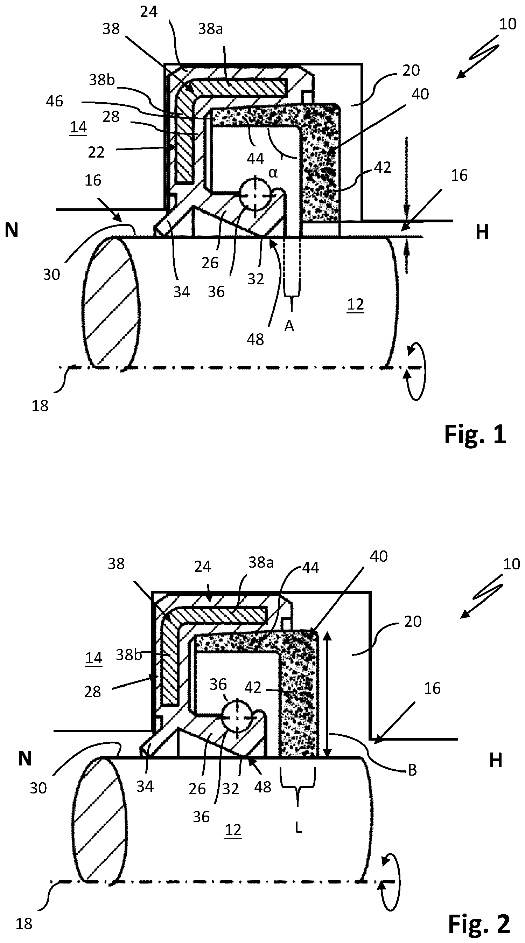

**Fign. 1** und **2** zeigen eine Rotationsdichtungsanordnung **10** mit einem ersten Maschinenteil **12** in Form einer Welle und mit einem zweiten Maschinenteil **14** in Form eines die Welle zumindest teilweise umgreifenden Gehäuses. Die Welle und das Gehäuse sind unter Ausbildung eines Dichtspalts **16** voneinander beabstandet angeordnet. Die Welle ist hier relativ zum Gehäuse um eine mit **18** bezeichnete Rotationsachse rotierbar. Das zweite Maschinenteil 14 weist eine Dichtungshaltestruktur **20** in Form einer Nut auf. Zur Abdichtung einer Öl- bzw. Hochdruckseite **H** des Dichtspalts 16 gegenüber der Außen- oder Niederdruckseite **N** dient eine Rotationsdichtung **22.** Die Rotationsdichtung 22 ist aus einem gummielastisch verformbaren Material ausgebildet. Die Rotationsdichtung 22 weist einen Halte- oder Fußabschnitt **24** und eine dynamische Dichtlippe **26** auf, die über einen radial verlaufend angeordneten Verbindungsabschnitt **28** miteinander verbunden sind. Die Dichtlippe 26 erstreckt sich im Wesentlichen parallel zur Dichtfläche **30** des ersten Maschinenteils 12 und weist eine Dichtkante **32** auf. Am Verbindungsabschnitt 28 ist hier beispielhaft weiterhin eine Staublippe **34** angeordnet, die sich vom Verbindungsabschnitt 28 in einer axialen Richtung zur Außenseite N hin wegerstreckt und welche an der Dichtfläche 30 anliegt. Die Rotationsdichtung 22 ist mit ihrem Fußabschnitt 24 in der Dichtungshaltestruktur 20 gehalten angeordnet. Gemäß Fig. 1 ist der Fußabschnitt 24 mit axialer Luft in der Dichtungshaltestruktur 20 angeordnet. Der Fußabschnitt 24 liegt am zweiten Maschinenteil 14 in einer radialen Richtung statisch dichtend an.

Die Dichtlippe 26 ist mittels einer Wurmfeder **36** in Richtung auf und gegen die Dichtfläche 30 vorgespannt. Zur Verstärkung der Rotationsdichtung 22 dient eine Armierungseinlage **38.** Die Armierungseinlage 38 weist hier eine L-förmige Querschnittsform auf und ist einstückig ausgeführt. Die Armierungseinlage 38 ist aus einem Material, das im Vergleich zum gummielastischen Material der übrigen Rotationsdichtung steifer ist, d. h. weniger verformbar, ist. Hier kommen insbesondere zähelastische Kunststoffe oder auch Metall in Betracht. Ein erster Schenkel **38a** der Armierungseinlage 38 erstreckt sich im Fußabschnitt 24 der Rotationsdichtung 22, ein zweiter Schenkel **38b** in deren Verbindungsabschnitt 28.

Auf der Ölseite H des Dichtspalts 16 ist ein Schaumring **40** angeordnet. Der Schaumring 40 weist einen Grundkörper **42** auf, von dem sich ein Halteabschnitt **44** in einer axialen Richtung seitlich wegerstreckt. Zwischen dem Grundkörper 42 und dem Halteabschnitt 44 ist ein Winkel α ausgebildet, der zwischen 70° und 110° beträgt. Der Halteabschnitt 44 ist hier ringförmig und mit dem Grundkörper 42 des Schaumrings 40 einstückig ausgeführt. Der Schaumring 40 umgreift das erste Maschinenteil 12 in einer zur Rotationsdichtung 22 korrespondierenden Weise. Der Grundkörper 42 ist scheibenförmig ausgebildet und hat ein mittiges Loch, durch das die Welle geführt ist. Die Differenz zwischen einem Innenumfangsdurchmesser des Grundkörpers 42 und einem Außenumfangsdurchmesser des Grundkörpers 42 definiert eine Ringbreite **B.**

Der Schaumring 40 ist am Fußabschnitt 24 der Rotationsdichtung 22 durch alleiniges Klemmen befestigt. Der Halteabschnitt 44 untergreift dazu den Fußabschnitt 24 in einer axialen Richtung und liegt an diesem in radialer Richtung innenseitig an. Durch die dem Schaummaterial innenwohnende Elastizität liegt der Halteabschnitt 44 in radialer Richtung vorgespannt am Fußabschnitt 24 an. Der Haltabschnitt 44 kann sich mit seinem freien Ende **46** bis zum Verbindungsabschnitt 28 der Rotationsdichtung 22 erstrecken. Der Verbindungsabschnitt 28 bildet so einerseits einen Montageanschlag für den Halteabschnitt 44. Dadurch kann andererseits eine zur Rotationsachse 18 streng orthogonal verlaufende Ausrichtung des Grundkörpers 42 des Schaumrings 40 (bzw. koaxiale Ausrichtung des Schaumrings 40) sowie auch ein definierter Abstand **A** desselben zur Dichtlippe 26, insbesondere zur Dichtkante 32 bzw. zu dem mit Schmiermittel zu versorgenden Dichtbereich **48** der Rotationsdichtungsanordnung 10, erreicht werden. Der Schaumring 40 liegt an der Dichtfläche 30 in Umfangsrichtung mit Unterbrechungen, d.h. abschnittsweise, an, wie dies in den Fign. 1 und 2 gezeigt ist. Der Schaumring 40 kann dabei mit einer radialen Vorspannung an der Dichtfläche anliegen.

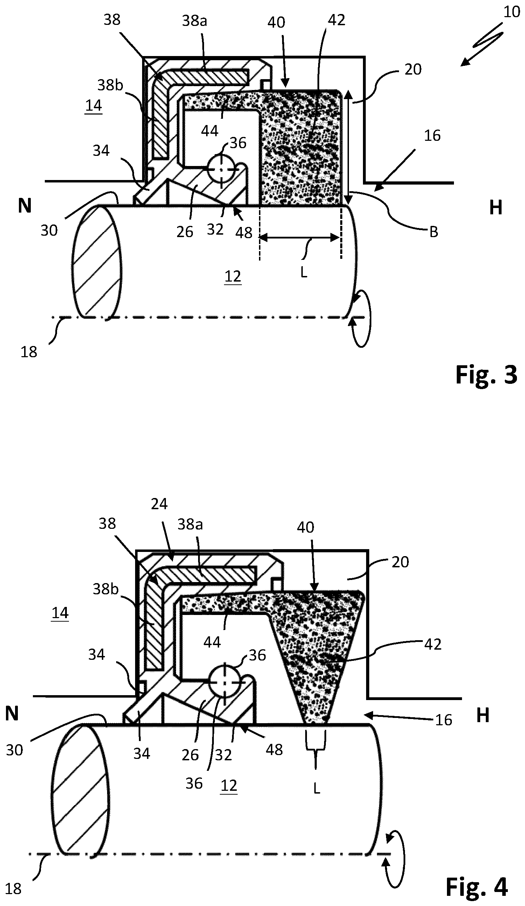

Gemäß dem in **Fig. 3** gezeigten Ausführungsbeispiel kann der Schaumring 40 einen Grundkörper 42 mit einer im Vergleich zu der in den Fign. 1 und 2 gezeigten Ausführungsform größeren axialen Länge **L** aufweisen. Der Schaumring 40 kann dadurch im Vergleich zu dem Ausführungsbeispiel gemäß den Fign. 1 und 2 ein größeres Rückhaltevermögen gegenüber partikulären Verunreinigungen d. h. eine größere Filterkapazität, sowie ein größeres Schmiermittelaufnahmevermögen aufweisen. Die axiale Länge L entspricht hier ungefähr ¾ der radialen Ringdicke B.

Zwecks einer größeren Kontaktflächenpressung des Schaumrings 40 an der Dichtfläche 30 kann der Schaumring 40 gemäß **Fig. 4** eine sich zur Dichtfläche 30 hin verjüngende Querschnittsform aufweisen. Durch diese Bauart kann zudem eine kapillarkraftbedingte Aufnahme von Schmieröl auf der Ölseite des Dichtspalts begünstigt werden.

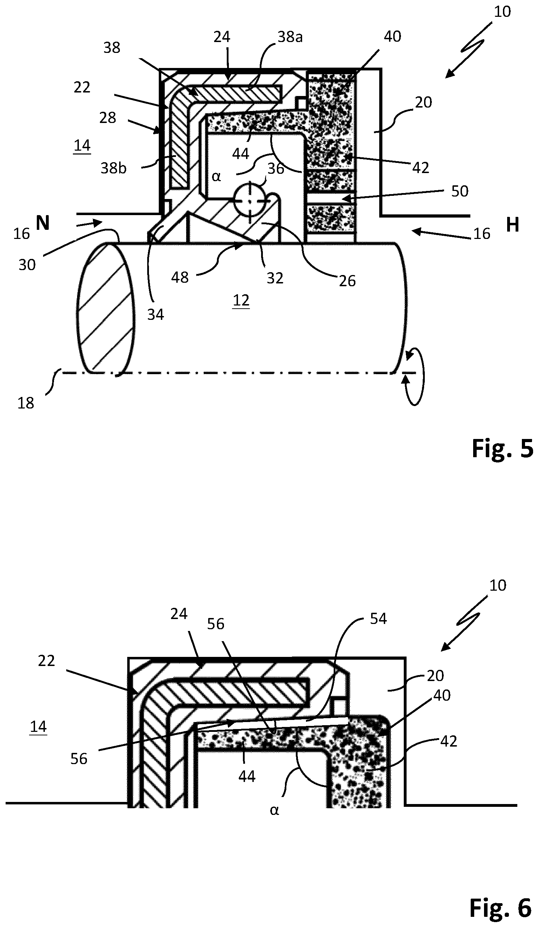

Gemäß der in **Fig. 5** gezeigten Rotationsdichtungsanordnung 10 kann sich der Schaumring 40 auch bis zum zweiten Maschinenteil 14 erstrecken und an diesem in einer radialen Richtung anliegen. Der Schaumring 40 kann sich so am Fußabschnitt 24 der Rotationsdichtung zusätzlich in einer axialen Richtung abstützen.

Die in der Zeichnung dargestellten Rotationsdichtungen 22 sind allesamt druckaktivierbar, d. h. werden durch und proportional zu einem auf der Ölseite H gegebenen Betriebsdrucks P eines Mediums (etwa Schmieröl) gegen die Dichtfläche 30 gepresst. Der Schaumring 40 kann hierzu mit einer oder mehreren axialen Durchgangsausnehmungen **50** versehen sein, um einem Druckgefälle über den Schaumring 40 entgegenzuwirken.

Zur nochmals weiter verbesserten Lagefixierung des Schaumrings am Fußabschnitt 24 der Rotationsdichtung 22 kann dieser gemäß **Fig. 6** im Gewindeeingriff mit einem am Fußabschnitt 24 ausgebildeten Innengewinde **52** stehen. Das Außengewinde **54** des Schaumrings 40 kann durch einfaches Eindrehen des Schaumrings 40 unter Verformung des Schaummaterials in das Innengewinde 52 erzeugt sein oder alternativ durch ein am Halteabschnitt 44 aufgebrachtes, insbesondere angespritztes, geeignetes zähelastisches Kunststoffmaterial gebildet sein.

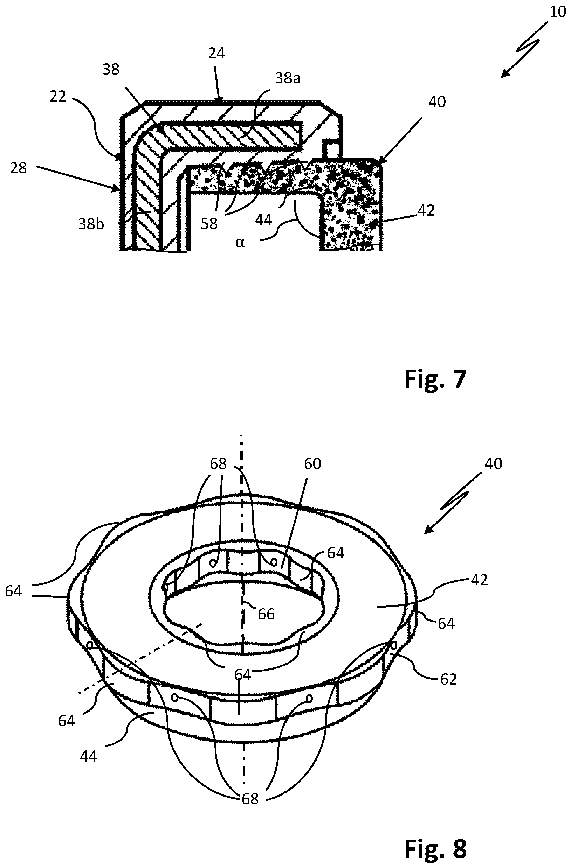

Nach der in **Fig. 7** gezeigten Ausführungsform der Rotationsdichtungsanordnung 10 kann zumindest der Fußabschnitt 24 der Rotationsdichtung 22 an seiner dem Schaumring 40 zuweisenden Innenseite **56** Riffel **58** aufweisen, die verdrängend oder schneidend in das Material des Schaumrings 40 eingreifen. Der Schaumring 40 kann gemäß einem in der Zeichnung nicht näher wiedergegebenen Ausführungsform im unbelasteten d. h nicht-eingebauten Zustand dazu entsprechende Riffel 58 aufweisen. Die Riffel 58 können jeweils im Sinne von Zähnen oder auch ringförmig ausgeführt sein.

In **Fig. 8** ist ein Schaumring 40 einer Rotationsdichtungsanordnung 10 gemäß den Fign. 1 und 2 in einer perspektivischen Ansicht gezeigt. Der Schaumring 40 weist eine in Umfangsrichtung gewellte Innenumfangsseite 60 und eine in Umfangsrichtung gewellte Außenumfangsseite 62 auf. Die in radialer Richtung von der Innenumfangsseite **60** und in radialer Richtung von der Außenumfangsseite **62** vorspringenden Vorsprünge bzw. Ausbuchtungen **64** sind zueinander jeweils in radialer Richtung paarweise fluchtend angeordnet. Dadurch ergibt sich im Einbauzustand des Schaumrings 40 in Umfangsrichtung eine variable Kontaktpressungsverteilung des Schaumrings 40 an der Dichtfläche 30.

Der Schaumring kann darüber hinaus - bezogen auf dessen Mittelachse **66** Radialkanäle **68** aufweisen, die sich vorzugsweise von der Innenumfangsseite 60 bis zur Außenumfangsseite 62 des Schaumrings 10 erstrecken und die einer zusätzlichen kapillaren Schmiermittelaufnahme dienen.

Die vorstehend im Zusammenhang mit den Fign. 1 bis 8 erläuterten Schaumringe können aus einem geschlossenzelligen, einem offenzelligen oder einem gemischt geschlossenzelligen/offenzelligen Schaumstoff bestehen.

## Patentansprüche

1. Rotationsdichtungsanordnung (10) umfassend:
• ein erstes Maschinenteil (12) in Form einer Welle;
• ein die Welle umgreifendes zweites Maschinenteil (14),
wobei das erste Maschinenteil (12) und das zweite Maschinenteil (14) unter Ausbildung eines Dichtspalts (16) voneinander beabstandet und um eine Rotationsachse (18) relativ zueinander rotierbar angeordnet sind;
• eine Dichtungshaltestruktur (20), die an einem der beiden Maschinenteile (12, 14) ausgebildet ist;
• eine Rotationsdichtung (22) mit einem Fußabschnitt (24) und mit einer Dichtlippe (26), die über einen Verbindungsabschnitt (28) miteinander verbunden sind, wobei der Fußabschnitt (24) an oder in der Dichtungshaltestruktur (20) angeordnet ist und wobei die Dichtlippe (26) an einer Dichtfläche (30) des jeweilig anderen Maschinenteils (12, 14) dichtend anliegt, um eine Ölseite (H) gegenüber einer Außenseite (N) der Rotationsdichtungsanordnung (10) abzudichten; und
• einen auf der Ölseite (H) angeordneten Schaumring (40) mit einem Grundkörper (42) und mit einem Halteabschnitt (44), wobei der Schaumring (40) das erste Maschinenteil (12) umgreift und über den Halteabschnitt (44) am Fußabschnitt (24) der Rotationsdichtung (22) gehalten angeordnet ist,
**dadurch gekennzeichnet,**
**dass** der Schaumring (40) zumindest in seinem unbelasteten nicht-montierten Zustand eine gewellte Innenumfangsseite (60) und/oder eine gewellte Außenumfangsseite (62) aufweist.

2. Rotationsdichtungsanordnung (10) gemäß Anspruch 1, **dadurch gekennzeichnet, dass** sich der Halteabschnitt (44) vom Grundkörper (42) seitlich wegerstreckt.

3. Rotationsdichtungseinrichtung (10) gemäß Anspruch 1 oder 2, **dadurch gekennzeichnet, dass** der Halteabschnitt (44) in Umfangsrichtung mehrteilig oder ringförmig geschlossen ausgeführt ist.

4. Rotationsdichtungsanordnung (10) gemäß einem der vorhergehenden Ansprüche, **dadurch gekennzeichnet, dass** der Schaumring (40) über den Halteabschnitt (44) an der Rotationsdichtung (22), bevorzugt alleinig, geklemmt gehalten ist.

5. Rotationsdichtungsanordnung (10) gemäß einem der vorhergehenden Ansprüche, **dadurch gekennzeichnet, dass** der Halteabschnitt (44) des Schaumrings (40) und/oder der Fußabschnitt (24) der Rotationsdichtung (22) geriffelt ausgeführt ist/sind.

6. Rotationsdichtungsanordnung (10) gemäß einem der vorhergehenden Ansprüche, **dadurch gekennzeichnet, dass** der Schaumring (40) und der Fußabschnitt (24) der Rotationsdichtung (22) im gegenseitigen Gewindeeingriff stehen.

7. Rotationsdichtungsanordnung (10) gemäß einem der vorhergehenden Ansprüche, **dadurch gekennzeichnet, dass** der Halteabschnitt (44) und/oder der Grundkörper (42) des Schaumrings (40) am Fußabschnitt (24) der Rotationsdichtung (22) in einer zur Rotationsachse (18) axialen Richtung abgestützt ist/sind.

8. Rotationsdichtungsanordnung (10) gemäß einem der vorhergehenden Ansprüche, **dadurch gekennzeichnet, dass** sich der Halteabschnitt (44) des Schaumrings (40) bis zum Verbindungsabschnitt (28) der Rotationsdichtung (22) erstreckt.

9. Rotationsdichtungsanordnung (10) gemäß einem der vorhergehenden Ansprüche, **dadurch gekennzeichnet, dass** die Rotationsdichtung (22) und/oder der Schaumring (40) mit einer Armierungseinlage (38) versehen ist/sind, die vorzugsweise eine L-förmige Querschnittsform aufweist.

10. Rotationsdichtungsanordnung (10) gemäß einem der vorhergehenden Ansprüche, **dadurch gekennzeichnet, dass** der Grundkörper (42) des Schaumrings (40) eine rechteckige oder eine sich in Richtung der Dichtfläche (30) verjüngende Querschnittsform aufweist.

11. Rotationsdichtungsanordnung (10) gemäß einem der vorhergehenden Ansprüche, **dadurch gekennzeichnet, dass** der Schaumring (40) an der Dichtfläche (30) zumindest abschnittsweise unmittelbar anliegt.

12. Rotationsdichtungsanordnung (10) gemäß einem der vorhergehenden Ansprüche, **dadurch kennzeichnet, dass** der Grundkörper (42) zumindest teilweise aus einem geschlossenzelligen, einem offenzelligen oder einem gemischt geschlossenzelligen/offenzelligen Schaumstoff ausgebildet ist.

13. Rotationsdichtungsanordnung (10) gemäß einem der vorhergehenden Ansprüche, **dadurch gekennzeichnet, dass** der Schaumring (40) in Umfangsrichtung zumindest einen Radialkanal (68) aufweist, der sich vorzugsweise von der Innenumfangsseite (60) bis zur Außenumfangsseite (62) des Schaumrings (40) erstreckt.

14. Rotationsdichtungsanordnung (10) gemäß einem der vorhergehenden Ansprüche, **dadurch gekennzeichnet, dass** die Rotationsdichtung (22) druckaktivierbar ist und der Schaumring (40) mit einer axialen Durchgangsausnehmung (50) oder mit mehreren axialen Durchgangsausnehmungen (50) versehen ist.

15. Rotationsdichtungsanordnung gemäß einem der vorhergehenden Ansprüche, **dadurch gekennzeichnet, dass** die Rotationsdichtung (22) eine zur Außenseite (N) weisende Staublippe (34) aufweist und/oder mittels eines Vorspannelements, insbesondere einer Wurmfeder (36), an der Dichtfläche (30) vorgespannt dichtend anliegt.

16. Rotationsdichtungsanordnung (10) gemäß einem der vorhergehenden Ansprüche, **dadurch gekennzeichnet, dass** der Schaumring (40) an dem die Dichtungshaltestruktur (20) aufweisenden Maschinenteil (12, 14) unmittelbar anliegt.

17. Rotationsdichtungsanordnung (10) gemäß einem der vorhergehenden Ansprüche, **dadurch gekennzeichnet, dass** der Grundkörper (42) derart ausgebildet ist, dass dieser in einer radialen Richtung zumindest von dem Fußabschnitt (24) bis zur Dichtfläche (30) ragt.

## Claims

1. A rotary seal assembly (10) comprising:
• a first machine part (12) in the form of a shaft;
• a second machine part (14) which engages around the shaft, wherein the first machine part (12) and the second machine part (14) are spaced apart from one another with the formation of a sealing gap (16) and are arranged rotatably relative to one another about an axis of rotation (18);
• a seal-holding structure (20) which is formed on one of the two machine parts (12, 14);
• a rotary seal (22) with a foot portion (24) and with a sealing lip (26), which are connected to one another via a connecting portion (28), wherein the foot portion (24) is arranged on or in the seal-holding structure (20) and wherein the sealing lip (26) bears in a sealing manner against a sealing surface (30) of the respective other machine part (12, 14), in order to seal off an oil side (H) from an outer side (N) of the rotary seal assembly (10); and
• a foam ring (40) arranged on the oil side (H) and with a base body (42) and with a holding portion (44), wherein the foam ring (40) engages around the first machine part (12) and is arranged so as to be held on the foot portion (24) of the rotary seal (22) via the holding portion (44),
**characterized in that**
the foam ring (40) has, at least in its unloaded, unmounted state, a corrugated inner circumferential side (60) and/or a corrugated outer circumferential side (62).

2. The rotary seal assembly (10) as claimed in claim 1, **characterized in that** the holding portion (44) extends laterally away from the base body (42).

3. The rotary seal assembly (10) as claimed in claim 1 or 2, **characterized in that** the holding portion (44) is embodied to be in multiple parts or annularly closed in the circumferential direction.

4. The rotary seal assembly (10) as claimed in any one of the preceding claims, **characterized in that** the foam ring (40) is held in a clamped manner, preferably exclusively in a clamped manner, via the holding portion (44) on the rotary seal (22).

5. The rotary seal assembly (10) as claimed in any one of the preceding claims, **characterized in that** the holding portion (44) of the foam ring (40) and/or the foot portion (24) of the rotary seal (22) is/are embodied in a fluted manner.

6. The rotary seal assembly (10) as claimed in any one of the preceding claims, **characterized in that** the foam ring (40) and the foot portion (24) of the rotary seal (22) are in mutual threaded engagement.

7. The rotary seal assembly (10) as claimed in any one of the preceding claims, **characterized in that** the holding portion (44) and/or the base body (42) of the form ring (40) is/are supported on the foot portion (24) of the rotary seal (22) in an axial direction with respect to the axis of rotation (18).

8. The rotary seal assembly (10) as claimed in any one of the preceding claims, **characterized in that** the holding portion (44) of the form ring (40) extends up to the connecting portion (28) of the rotary seal (22).

9. The rotary seal assembly (10) as claimed in any one of the preceding claims, **characterized in that** the rotary seal (22) and/or the foam ring (40) is/are provided with a reinforcement layer (38) which preferably has an L-shaped cross-sectional shape.

10. The rotary seal assembly (10) as claimed in any one of the preceding claims, **characterized in that** the base body (42) of the foam ring (40) has a cross-sectional shape which is rectangular or tapers in the direction of the sealing surface (30).

11. The rotary seal assembly (10) as claimed in any one of the preceding claims, **characterized in that** the foam ring (40) bears at least in portions directly against the sealing surface (30).

12. The rotary seal assembly (10) as claimed in any one of the preceding claims, **characterized in that** the base body (42) is formed at least partially from a closed-celled, an open-celled or a mixed closed-celled/open-celled foam.

13. The rotary seal assembly (10) as claimed in any one of the preceding claims, **characterized in that** the foam ring (40) has in the circumferential direction at least one radial channel (68) which extends preferably from the inner circumferential side (60) up to the outer circumferential side (62) of the foam ring (40).

14. The rotary seal assembly (10) as claimed in any one of the preceding claims, **characterized in that** the rotary seal (22) can be pressure-activated and the foam ring (40) is provided with an axial through-recess (50) or with several axial through-recesses (50).

15. The rotary seal assembly as claimed in any one of the preceding claims, **characterized in that** the rotary seal (22) has a dust lip (34) which points towards the outer side (N) and/or bears in a pretensioned, sealed manner against the sealing surface (30) by means of a pretensioning element, in particular a worm spring (36).

16. The rotary seal assembly (10) as claimed in any one of the preceding claims, **characterized in that** the foam ring (40) bears directly against the machine part (12, 14) which has the seal-holding structure (20).

17. The rotary seal assembly (10) as claimed in any one of the preceding claims, **characterized in that** the base body (42) is formed in such a manner that it projects in a radial direction at least from the foot portion (24) up to the sealing surface (30).

## Revendications

1. Ensemble rotatif d'étanchement (10) comprenant :
• une première partie de machine (12) revêtant la forme d'un arbre ;
• une seconde partie de machine (14) qui entoure ledit arbre,
ladite première partie de machine (12) et ladite seconde partie de machine (14) étant distantes l'une de l'autre en réservant un espace interstitiel d'étanchement (16), et étant agencées de manière à pouvoir tourner l'une par rapport à l'autre autour d'un axe de rotation (18) ;
• une structure (20) de retenue de garniture d'étanchement, ménagée sur l'une des deux parties de machine (12, 14) ;
• une garniture rotative d'étanchement (22), munie d'une zone d'embase (24) et d'une lèvre d'étanchement (26) reliées l'une à l'autre par l'intermédiaire d'une zone de liaison (28), sachant que ladite zone d'embase (24) est disposée sur, ou dans la structure (20) de retenue de la garniture d'étanchement, et sachant que ladite lèvre d'étanchement (26) est en applique, de manière étanche, contre une surface d'étanchement (30) de l'autre partie de machine (12, 14) respective, afin d'assurer l'étanchéité d'un côte huile (H) par rapport à un côté extérieur (N) dudit ensemble rotatif d'étanchement (10) ; et
• une bague (40) en mousse, située côté huile (H), dotée d'un corps de base (42) et d'une zone de maintien (44), laquelle bague (40) en mousse ceinture la première partie de machine (12) et est implantée sur la zone d'embase (24) de la garniture rotative d'étanchement (22), en étant retenue par ladite zone de maintien (44),
**caractérisé par le fait**
**que** la bague (40) en mousse est nantie d'une face périphérique intérieure (60) ondulée et/ou d'une face périphérique extérieure (62) ondulée, au moins à l'état non monté et non soumis à des charges.

2. Ensemble rotatif d'étanchement (10) selon la revendication 1, **caractérisé par le fait que** la zone de maintien (44) s'éloigne du corps de base (42) dans le sens latéral.

3. Ensemble rotatif d'étanchement (10) selon la revendication 1 ou 2, **caractérisé par le fait que** la zone de maintien (44) est réalisée en plusieurs parties ou est de réalisation annulairement fermée dans la direction du pourtour.

4. Ensemble rotatif d'étanchement (10) selon l'une des revendications précédentes, **caractérisé par le fait que** la bague (40) en mousse est retenue sur la garniture rotative d'étanchement (22), de préférence seule, en étant coincée par l'intermédiaire de la zone de maintien (44).

5. Ensemble rotatif d'étanchement (10) selon l'une des revendications précédentes, **caractérisé par le fait que** la zone de maintien (44) de la bague (40) en mousse, et/ou la zone d'embase (24) de la garniture rotative d'étanchement (22), est/sont de réalisation striée.

6. Ensemble rotatif d'étanchement (10) selon l'une des revendications précédentes, **caractérisé par le fait que** la bague (40) en mousse et la zone d'embase (24) de la garniture rotative d'étanchement (22) sont en prise mutuelle par filetage.

7. Ensemble rotatif d'étanchement (10) selon l'une des revendications précédentes, **caractérisé par le fait que** la zone de maintien (44), et/ou le corps de base (42) de la bague (40) en mousse, est/sont en appui sur la zone d'embase (24) de la garniture rotative d'étanchement (22) dans une direction axiale par rapport à l'axe de rotation (18).

8. Ensemble rotatif d'étanchement (10) selon l'une des revendications précédentes, **caractérisé par le fait que** la zone de maintien (44) de la bague (40) en mousse s'étend jusqu'à la zone de liaison (28) de la garniture rotative d'étanchement (22).

9. Ensemble rotatif d'étanchement (10) selon l'une des revendications précédentes, **caractérisé par le fait que** la garniture rotative d'étanchement (22), et/ou la bague (40) en mousse, est/sont pourvue(s) d'une pièce intégrée de renfort (38) préférentiellement configurée en L en coupe transversale.

10. Ensemble rotatif d'étanchement (10) selon l'une des revendications précédentes, **caractérisé par le fait que** le corps de base (42) de la bague (40) en mousse présente une configuration de section transversale rectangulaire ou s'amenuisant en direction de la surface d'étanchement (30).

11. Ensemble rotatif d'étanchement (10) selon l'une des revendications précédentes, **caractérisé par le fait que** la bague (40) en mousse est directement en applique contre la surface d'étanchement (30), au moins par tronçons.

12. Ensemble rotatif d'étanchement (10) selon l'une des revendications précédentes, **caractérisé par le fait que** le corps de base (42) est réalisé, au moins partiellement, en une mousse à pores fermés, à pores ouverts, et/ou de type mixte à pores fermés/à pores ouverts.

13. Ensemble rotatif d'étanchement (10) selon l'une des revendications précédentes, **caractérisé par le fait que** la bague (40) en mousse est munie, dans la direction du pourtour, d'au moins un canal radial (68) qui s'étend, de préférence, depuis la face périphérique intérieure (60) jusqu'à la face périphérique extérieure (62) de ladite bague (40) en mousse.

14. Ensemble rotatif d'étanchement (10) selon l'une des revendications précédentes, **caractérisé par le fait que** la garniture rotative d'étanchement (22) peut être activée sous l'effet d'une pression, et la bague (40) en mousse est munie d'un évidement axial de passage (50) ou de plusieurs évidements axiaux de passage (50).

15. Ensemble rotatif d'étanchement (10) selon l'une des revendications précédentes, **caractérisé par le fait que** la garniture rotative d'étanchement (22) est dotée d'une lèvre antipoussière (34) pointant vers le côté extérieur (N), et/ou est en applique de manière étanche contre la surface d'étanchement (30), en étant précontrainte au moyen d'un élément de précharge, en particulier d'un ressort à boudin (36).

16. Ensemble rotatif d'étanchement (10) selon l'une des revendications précédentes, **caractérisé par le fait que** la bague (40) en mousse est directement en applique contre la partie de machine (12, 14) présentant la structure (20) de retenue de la garniture d'étanchement.

17. Ensemble rotatif d'étanchement (10) selon l'une des revendications précédentes, **caractérisé par le fait que** le corps de base (42) est conçu de façon telle que ce dernier dépasse au moins depuis la zone d'embase (24) jusqu'à la surface d'étanchement (30) dans une direction radiale.
